# EUROPEAN PATENT SPECIFICATION

(11) **EP 0 842 007 B1**
(45) Date of publication and mention of the grant of the patent: **28.07.1999**
(21) Application number: 96920952.7
(22) Date of filing: 20.06.1996
(51) Int. Cl.: B23K 1/00, B23K 1/20

(54) **FORMING HEAT EXCHANGERS**
HERSTELLUNG VON WÄRMETAUSCHERN
FORMATION D'ECHANGEURS DE CHALEUR

(30) Priority: 13.07.1995 GB 9514375
(43) Date of publication of application: 20.05.1998
(73) Proprietor: Federal-Mogul Technology Limited, Rugby, Warwickshire CV22 7SB (GB)
(72) Inventor: O'NEILL, Christopher, Gerald, Hillcrest 3610, Natal (ZA)
(74) Representative: Drury, Peter Lawrence
(86) International application number: GB9601504
(87) International publication number: WO9702918

(56) References cited:
- EP-A- 0 075 722
- EP-A- 0 302 232
- FR-A- 2 460 175
- US-A- 4 762 674
- PATENT ABSTRACTS OF JAPAN vol. 011, no. 327 (M-635), 24 October 1987 & JP,A,62 110866 (SHOWA ALUM CORP), 21 May 1987,

## Description

This invention is concerned with forming heat exchangers, in particular for use in vehicles.

It is common practice to form heat exchangers by assembling components, many of which are tubular, and brasing the components together. The components are made of aluminium or aluminium alloy and are usually clad with a eutectic filler alloy of aluminium and silicon. In order to remove the surface oxides, brazing flux is applied to the joints. The brazing flux may be applied by dipping the components into an aqueous slurry containing the brazing flux, eg as described in US patent number 3,951,328. In the brazing operation, the filler alloy and the flux melt and form brazed joints.

Many heat exchangers incorporate tubes which are of an elongated oval shape in transverse cross-section, ie the width of this cross-section in one direction is many times the width in a direction normal to said one direction. Such tubes are conventionally formed from a sheet of aluminium or an alloy thereof. The sheet is bent into a tubular shape by bringing opposite edges of the sheet together. These edges are then joined together to seal the tube. Conventionally, the metal sheets have been seam-welded to achieve a reliable seal but this is a difficult process. Attempts have been made to seal the joints of such tubes by brazing. The technique involves cladding the aluminium with a eutectic filler alloy before it is bent to form the tube, bending opposite edges into the interior of the tube to give two parallel flanges which are adjacent to one another, and applying a flux-containing slurry to the exposed end of the gap between the flanges. The flux is intended to flow down the gap during brazing so that the brazed joint extends across said flanges. This process, however, results in a high failure rate.

It is an object of the present invention to provide a method of forming a heat exchanger which enables tubular components to be formed with reliable brazed joints.

The invention provides a method of forming a heat exchanger from components which have at least a surface layer made of aluminium or an alloy thereof, the method comprising forming the components, at least one of which is tubular, assembling the components, and brazing the components together, wherein said tubular component is formed by bending a sheet into a tubular shape by bringing opposite edge portions of the sheet into overlapping relationship with one another, the gap between said overlapping portions extending along said component, characterised in that the method also comprises applying a bead containing particles of brazing flux, the bead being applied to the tubular component along the exposed end of said gap, and applying liquid adhesive agent on top of said bead, drying the liquid adhesive agent such that it leaves a solid residue which adheres to the component and retains the flux in position whereby said solid residue is such that it can be driven off by heating, the tubular component being orientated during brazing so that the flux which melts in the brazing flows into said gap and enables a brazed joint to be formed between the overlapping portions.

The term "adhesive agent" is used herein to denote any substance which causes the particles to adhere to a component and hence includes some substances which are not normally considered to be adhesives.

In a method in accordance with the invention, the bead provides a reservoir of flux ensuring a plentiful supply for forming a reliable brazed joint along the tubular component. The adhesive encapsulates this flux so that the component can be handled before brazing without loss of the flux.

The bead may comprise dry particles but is preferably in the form of a paste consisting of particles dispersed in a solvent which can be driven off by heating without leaving a significant residue. The requirement for the paste is that it should not flow significantly away from the gap. The solvent may be, for example, toluene, isopropanol, methyletherketone, or methylene chloride. The bead may, for example, comprise 15 to 20 % by weight of solvent. The bead may be about 3mm in width and at least 1mm in depth. The bead may contain between 2 and 20 milligrammes of particles per centimetre of the gap.

Preferably, said overlapping portions of the tubular component extend parallel to one another into the interior of the component. This form of tubular component is known per se and provides a large area for the brazed joint.

In order to provide additional space for the bead, said sheet may be bent in such a way that said exposed end of said gap is at the bottom of a groove which accommodates said bead.

In order to avoid the use of sheet which has been clad with eutectic filler alloy, the bead may also contain eutectic or near eutectic filler alloy. For example, the bead may contain particles of the eutectic or near eutectic alloy which are at least partially coated with flux. WO 94/29072 describes a method of brazing using such particles and WO 94/17941 describes a method by which such particles may be manufactured. Alternatively, the particles may comprise particles of filler alloy and particles of flux mixed together.

Preferably, said bead and said liquid adhesive agent contain the same solvent. The solvent used may be toluene and the component may be dried, eg by infra-red heaters to drive off the solvent.

In order to enable the tubular component to be brazed to another component of the heat exchanger, preferably, after the application of the bead and either before or after the application of the liquid adhesive agent, further particles containing brazing flux are applied in dry form to the tubular component for use in forming a brazed joint with another component, the further particles being secured to the component by the liquid adhesive agent. The further particles may also contain a eutectic or near eutectic filler alloy, eg the further particles may comprise particles of the type described above, having eutectic or near eutectic alloy coated at least partially with flux, or the further particles may be a mixture of eutectic alloy particles and flux particles. The further particles may be applied by sprinkling them on to the surface of the tubular component. If the further particles are applied after the liquid adhesive agent, they stick to the adhesive or, if they are applied before the agent, they are encapsulated thereby.

The liquid adhesive agent may be applied by spraying, preferably by hydraulic spraying (also known as airless spraying).

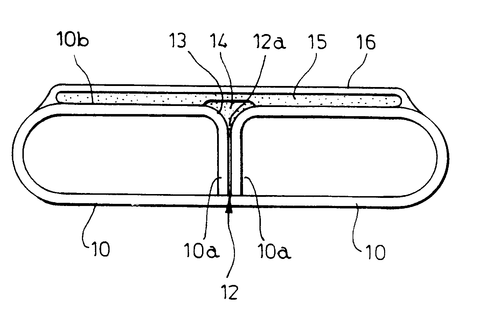

There now follows a detailed description, to be read with reference to the accompanying drawing, of a method of forming a heat exchanger which is illustrative of the invention.

The drawing is a diagrammatic cross-sectional view of a tubular component of a heat exchanger made by the illustrative method.

The illustrative method is a method of forming a heat exchanger from components which include tubular components such as the component 10 shown in the drawing. The components are made from aluminium which has not been clad with filler alloy. The illustrative method comprises forming the components, in the case of the components 10 by bending sheet aluminium which is 320 microns thick. The illustrative method also comprises assembling the components, and brazing the components together.

The tubular component 10 is formed by bending a sheet into the elongated oval tubular shape shown in the drawing by bringing opposite edge portions 1Oa of the sheet into overlapping relationship with one another. Specifically, the overlapping portions 1Oa extend parallel to one another into the hollow interior of the component 10. The gap 12 between said overlapping portions 1Oa is very narrow as the portions 1Oa are close together. This gap 12, however, extends along the component 10 and requires to be sealed to make the component water-tight. The tubular component 10 has substantially flat horizontal upper and lower surfaces, 1Ob and 1Oc respectively. The upper surface 1Ob has the portions 1Oa projecting downwardly from a central region thereof and, at this point, the sheet is bent so that it forms a groove 13 projecting downwardly and leading to an exposed upper end 12a of the gap 12 which is at the bottom of the groove 13.

The illustrative method also comprises applying a bead 14 in the form of a paste containing particles of brazing flux in a solvent which can be driven off by heating. Specifically, the bead 14 comprises particles of near-eutectic filler alloy with a composition of 11 wt% silicon and 89 wt% aluminium coated with flux having a composition of 40 to 50 wt% of potassium fluoride and 50 to 60 wt% of aluminium fluoride. The particles are dispersed in 15 wt% of toluene. The bead 14 is applied to the tubular component 10 along the exposed end 12a of the gap 12 by being extruded into the groove 13 to a width of 3mm. The bead stands slightly proud of the groove and has a depth of about 2mm. The bead 14 contains about 5.7 milligrammes of particles per centimetre length of the gap 12.

Next, in the illustrative method further particles 15 containing brazing flux are applied in dry form to the upper surface 1Ob of the component 10. The particles 15 are of the same type as the particles in the bead 14 and are for use in forming a brazed joint with another component of the heat exchanger. The particles 15 are sprinkled over the surface 1Ob from a vibrating sieve.

The illustrative method also comprises applying a liquid adhesive agent 16 over the surface 1Oa on top of said bead 14. The liquid adhesive agent is such that it dries to leave a solid residue which adheres to the component 10 and retains the bead 14 in position and said solid residue can be driven of by heating. The liquid adhesive agent 16 also serves to secure the further particles 15 to the surface 1Ob. Specifically, the liquid adhesive agent 16 comprises an acrylic resin dissolved in toluene. The acrylic resin is preferably polymethylmethacrylate. The agent 16 is applied by hydraulic spraying. Clearly, the spray must be gentle enough to avoid significant displacement of the particles 15 on the surface 1Ob.

After the application of the liquid adhesive agent 16, the component 10 is passed through a drying oven in which the solvent in the agent 16 and in the bead 14 is driven off by the application of infra-red heat. The component 1O can now, if desired, have more particles 15 secured to its lower surface 1Oc by inverting the component 10, sprinkling particles 15 on to the surface 1Oc, and spraying on further liquid adhesive agent 16 which is then also dried. The component 10 can now be handled without significant loss of flux and is assembled with the other components of the heat exchanger. The assembled heat exchanger is then inserted into a brazing furnace. In the furnace, the components are joined by brazed joints and, during this brazing, the tubular component 10 is orientated with the surface 1Ob uppermost so that the flux which was in the bead 14 melts and flows into said gap 12 enabling a brazed joint to be formed between the overlapping portions 1Oa.

It is found that the illustrative method results in heat exchangers having reliably sealed tubular components 10.

## Claims

1. A method of forming a heat exchanger from components which have at least a surface layer made of aluminium or an alloy thereof, the method comprising forming the components (10), at least one of which is tubular, assembling the components, and brazing the components together, wherein said tubular component is formed by bending a sheet into a tubular shape by bringing opposite edge portions (10a) of the sheet into overlapping relationship with one another, the gap (12) between said overlapping portions extending along said component, characterised in that the method also comprises applying a bead (14) containing particles of brazing flux, the bead being applied to the tubular component along the exposed end (12a) of said gap, and applying a liquid adhesive agent (16) on top of said bead (14), drying the liquid adhesive agent such that it leaves a solid residue which adheres to the component and retains the flux in position whereby said solid residue is such that it can be driven off by heating, the tubular component (10) being orientated during brazing so that the flux which melts in the brazing flows into said gap (12) and enables a brazed joint to be formed between the overlapping portions (10a).

2. A method according to claim 1, characterised in that the bead (14) is in the form of a paste containing the particles in a solvent which can be driven off by heating without leaving a significant residue.

3. A method according to claim 2, characterised in that the paste contains 15 to 20 % by weight of solvent.

4. A method according to any one of claims 1 to 3, characterised in that said overlapping portions (10a) of the tubular component extend parallel to one another into the interior of the component (10).

5. A method according to claim 4, characterised in that said sheet is bent in such a way that said exposed end (12a) of said gap is at the bottom of a groove (13) which accommodates said bead (14).

6. A method according to any one of claims 1 to 5, characterised in that the bead (14) also contains eutectic or near eutectic filler alloy.

7. A method according to claim 6, characterised in that the bead (14) contains particles of the eutectic or near eutectic alloy which are at least partially coated with flux.

8. A method according to any one of claims 1 to 7, characterised in that said bead (14) and said liquid adhesive agent (16) contain the same solvent.

9. A method according to any one of claims 1 to 8, characterised in that, after the application of the bead (14) and either before or after the application of the liquid adhesive agent (16), further particles (15) containing brazing flux are applied in dry form to the tubular component (10) for use in forming a brazed joint with another component, the further particles being secured to the component by the liquid adhesive agent.

10. A method according to claim 9, characterised in that at least some of said further particles (15) comprise a eutectic or near eutectic filler alloy coated at least partially with flux.

## Patentansprüche

1. Verfahren zur Herstellung eines Wärmetauschers aus Komponenten, welche wenigstens eine aus Aluminium oder einer Legierung davon gefertigte Oberflächenschicht aufweisen, welches Verfahren eine Ausbildung der Komponenten (10), von welchen wenigstens eine rohrförmig ist, einen Zusammenbau der Komponenten und ein Verlöten bzw. Hartverlöten der Komponenten miteinander umfaßt, wobei die rohrförmige Komponente durch ein Biegen eines Blattes bzw. Blechs in eine rohrförmige Form durch Bringen von gegenüberliegenden Kantenbereichen (10a) des Blechs in überlappende Beziehung zueinander gebildet wird, wobei sich ein Spalt (12) zwischen den einander überlappenden Bereichen entlang der Komponente erstreckt, dadurch gekennzeichnet, daß das Verfahren auch ein Aufbringen eines Bandes bzw. Wulstes (14), enthaltend Teilchen des Lötflußmittels, wobei der Wulst auf die rohrförmige Komponente entlang des freiliegenden Endes (12a) des Spalts aufgebracht wird, und ein Aufbringen eines flüssigen Klebemittels (16) auf die Oberseite des Wulstes (14), ein Trocknen des flüssigen Klebemittels, sodaß ein fester Rückstand zurückbleibt, welcher an der Komponente anhaftet und das Flußmittel in Position hält, wodurch der feste Rückstand derart ausgebildet wird, daß er durch Erhitzen entfernt werden kann, wobei die rohrförmige Komponente (10) während dem Löten bzw. Hartverlöten derart orientiert wird, daß das Flußmittel, welches in der Lötstelle schmilzt, in den Spalt (12) hineinfließt, und die Ausbildung einer verlöteten Verbindung zwischen den überlappenden Bereichen (10a) ermöglicht.

2. Verfahren nach Anspruch 1, dadurch gekennzeichnet, daß der Wulst (14) in der Form einer Paste, enthaltend die Teilchen in einem Lösungsmittel, welches durch Erhitzen ausgetrieben werden kann, ohne einen signifikanten Rückstand zu hinterlassen, vorliegt.

3. Verfahren nach Anspruch 2, dadurch gekennzeichnet, daß die Paste 15 bis 20 Gew.-% des Lösungsmittels enthält.

4. Verfahren nach einem der Ansprüche 1 bis 3, dadurch gekennzeichnet, daß die überlappenden Bereiche (10a) der rohrförmigen Komponente sich parallel zueinander in das Innere der Komponente (10) erstrecken.

5. Verfahren nach Anspruch 4, dadurch gekennzeichnet, daß das Blatt bzw. Blech derart gebogen wird, daß das freiliegende Ende (12a) des Spalts am Boden einer Rille bzw. Nut (13) angeordnet ist, welche den Wulst (14) aufnimmt.

6. Verfahren nach einem der Ansprüche 1 bis 5, dadurch gekennzeichnet, daß der Wulst (14) auch eine eutektische oder nahezu eutektische Füllstofflegierung enthält.

7. Verfahren nach Anspruch 6, dadurch gekennzeichnet, daß der Wulst (14) Teilchen der eutektischen oder nahezu eutektischen Legierung enthält, welche wenigstens teilweise mit Flußmittel beschichtet sind.

8. Verfahren nach einem der Ansprüche 1 bis 7, dadurch gekennzeichnet, daß der Wulst (14) und das flüssige Klebemittel (16) dasselbe Lösungsmittel enthalten.

9. Verfahren nach einem der Ansprüche 1 bis 8, dadurch gekennzeichnet, daß nach dem Aufbringen des Wulstes (14) und entweder vor oder nach dem Aufbringen des flüssigen Klebemittels (16) weitere Teilchen (15), enthaltend das Lötflußmittel, in trockener Form auf die rohrförmige Komponente (10) zur Verwendung bei einer Ausbildung einer verlöteten Verbindung mit einer anderen Komponente aufgebracht werden, wobei die weiteren Teilchen an der Komponente durch das flüssige Klebemittel gesichert werden.

10. Verfahren nach Anspruch 9, dadurch gekennzeichnet, daß wenigstens eines der weiteren Teilchen (15) eine eutektische oder nahezu eutektische Füllstofflegierung enthalten, die wenigstens teilweise mit Flußmittel beschichtet sind.

## Revendications

1. Procédé de formation d'un échangeur de chaleur à partir de composants ayant au moins une couche superficielle réalisée en aluminium ou en un de ses alliages, le procédé consistant à former les composants (10), dont l'un, au moins, est tubulaire, à assembler les composants et à unir les composants par brasage, ledit composant tubulaire étant formé en cintrant une feuille pour obtenir une forme tubulaire en rapprochant des parties de bord opposées (10a) de la feuille de façon à ce qu'elles se chevauchent, l'écart (12) entre lesdites parties qui se chevauchent s'étendant le long dudit composant, caractérisé en ce que le procédé consiste également à appliquer un cordon (14) contenant des particules de fondant de brasage, le cordon étant appliqué au composant tubulaire le long de l'extrémité exposée (12a) dudit écart, et à appliquer un agent adhésif liquide (16) au dessus dudit cordon (14), à faire sécher l'agent adhésif liquide de telle sorte qu'il laisse un résidu solide qui adhère au composant et retienne le fondant en position, ledit résidu solide étant tel qu'il puisse être éliminé par chauffage, le composant tubulaire (10) étant orienté pendant le brasage de sorte que le fondant qui fond lors du brasage s'écoule en pénétrant dans ledit écart (12) et permette de former un joint brasé entre les parties qui se chevauchent (10a).

2. Procédé selon la revendication 1, caractérisé en ce que le cordon (14) se présente sous la forme d'une pâte contenant les particules dans un solvant qui peut être éliminé par chauffage sans laisser de résidu important.

3. Procédé selon la revendication 2, caractérisé en ce que la pâte contient de 15 à 20% en poids de solvant.

4. Procédé selon l'une quelconque des revendications 1 à 2, caractérisé en ce que lesdites parties qui se chevauchent (10a) du composant tubulaire s'étendent parallèlement l'une à l'autre vers l'intérieur du composant (10).

5. Procédé selon la revendication 4, caractérisé en ce que ladite feuille est cintrée de telle sorte que ladite extrémité exposée (12a) dudit écart se trouve au fond d'une gorge (13) qui reçoit ledit cordon (14).

6. Procédé selon l'une quelconque des revendications 1 à 5, caractérisé en ce que le cordon (14) contient également un alliage d'apport eutectique ou presque eutectique .

7. Procédé selon la revendication 6, caractérisé en ce que le cordon (14) contient des particules de l'alliage eutectique ou presque eutectique qui sont revêtues, au moins partiellement, de fondant.

8. Procédé selon l'une quelconque des revendications 1 à 7, caractérisé en ce que ledit cordon (14) et ledit agent adhésif liquide (16) contiennent le même solvant.

9. Procédé selon l'une quelconque des revendications 1 à 8, caractérisé en ce que, après l'application du cordon (14) et soit avant, soit après l'application de l'agent adhésif liquide (16), des particules (15) additionnelles contenant du fondant de brasage sont appliquées sous forme sèche au composant tubulaire (10) en vue de leur utilisation pour former un joint brasé avec un autre composant, les particules additionnelles étant fixées au composant par l'agent adhésif liquide.

10. Procédé selon la revendication 9, caractérisé en ce qu'au moins certaines desdites particules (15) additionnelles comportent un alliage d'apport eutectique ou presque eutectique revêtu, au moins partiellement, de fondant.
